Europäisches Patentamt

**European Patent Office**

**Office européen des brevets**

(11) Publication number: **0 074 699**

**A1**

# (12) EUROPEAN PATENT APPLICATION

(21) Application number: **82300896.6**

(22) Date of filing: **22.02.82**

(51) Int. Cl.³: **H 02 G 3/06**

(30) Priority: **11.09.81 GB 8127497**

(43) Date of publication of application:
**23.03.83 Bulletin 83/12**

(84) Designated Contracting States:
**AT BE CH DE FR IT LI LU NL SE**

(71) Applicant: **BICC Limited**
**21, Bloomsbury Street**
**London, WC1B 3QN(GB)**

(72) Inventor: **White, Ronald Leslie Albert**
**47 Greygoose Park**
**Harlow Essex(GB)**

(72) Inventor: **Owers, Geoffrey**
**32 Priory Avenue**
**Old Harlow Essex(GB)**

(74) Representative: **Ross Gower, Edward Lewis et al,**
**BICC Limited Patents Department 38 Wood Lane**
**London W12 7DX(GB)**

(54) **An improved cable ladder.**

(57) A cable ladder system comprises cable ladders so arranged end-to-end that their stringers 1 abut and are secured together by separately formed connecting members 20 each overlapping and being secured to adjacent end portions of a pair of aligned stringers. Parts 28 of each connecting member 20 protrude through holes 21 in the adjacent end portions of the stringers 1 and each connecting member is locked to the stringers by a pin 29 extending lengthwise between the protruding parts of the connecting member and surfaces of the end portions of the aligned stringers. Overlying longitudinally extending edges of the end portions of the stringers 1 and of the connecting member 20 are positively locked together by deformed parts 30 of the longitudinal edge of the connecting member engaging in holes 22 in the longitudinal edges of the end portions of the stringers.

Fig.4.

EP 0 074 699 A1

## AN IMPROVED CABLE LADDER

This invention relates to ladder-like structures for supporting electric cables and/or service pipes, which structures comprise a pair of elongate side members (generally and hereinafter referred to as "stringers") and, extending tranversely between and secured to the stringers at spaced positions along their lengths, a plurality of elongate support members (generally and hereinafter referred to as "rungs"). Such ladder-like structures may also include coupling components such as bends for supporting electric cables and/or service pipes as the direction and/or plane in which they extend gradually changes, tee-connectors and cross-connectors, all such coupling components having, as common features, at least one pair of stringers interconected by mutually spaced transversely extending rungs. For convenience, all such ladder-like structures and coupling components therefor will hereinafter be included in the generic expression "cable ladder".

In the construction of ladder-like support systems built up of cable ladders, it is the general practice to secure adjacent cable ladders end-to-end by interconnecting the stringers of the cable ladders. This is usually done either by arranging for the stringers of one cable ladder to overlap the stringers of an adjacent cable ladder and to secure the overlapping parts of the cable stringers together by one or more than one bolt or by arranging for the stringers of adjacent cable ladders to abut or be closely spaced apart and to secure them together by a separately formed connecting member or "fish plate" which overlaps adjacent end portions of both stringers and is secured to these parts by bolts. In both methods of securing adjacent cable ladders together, an operative has to insert and tighten a number of bolts by means of a spanner and, under difficult conditions, the spanner and/or the nuts and bolts are liable to be dropped. Such methods of securing adjacent cable ladders together are both tedious and time-consuming and can add to the cost of erection of a ladder-like support system.

It is an object of the present invention to provide an improved cable ladder system in which adjacent cable ladders can be readily connected together without the use of a hand tool.

According to the invention we provide an improved cable ladder system comprising at least two cable ladders so arranged end-to-end that their stringers abut or are closely spaced apart and, securing the stringers together, separately formed connecting members each overlapping and being secured to adjacent end portions of a pair of aligned stringers, wherein parts of each connecting member and/or of said adjacent end portions of the stringers protrude through holes in said adjacent end portions of the stringers and/or in the connecting members and each connecting member is locked to the stringers by at least one separate elongate member extending lengthwise between said protruding parts of the connecting member and/or of said adjacent end portions of the aligned stringers and surfaces of said end portions of the aligned stringers and/or a surface of the connecting member.

Preferably, parts of each connecting member protrude through holes in said adjacent end poritions of the stringers and where, as is preferred, each stringer has a longitudinally extending surface that is inclined at an obtuse angle to an adjoining longitudinally extending surface of the stringer and has, at each of a plurality of longitudinally spaced positions along the length of the stringer, two longitudinally spaced, tranversely extending slots in said inclined surface through which parts of the side walls of a channel-shaped rung protrude, said protruding parts of the side walls of the rung and/or the adjacent parts of the stringer being so deformed that the rung is permanently locked to the stringer, preferably the or each hole in the end portion of each stringer through which a part of the connector member protrudes extends through that part of the stringer having said inclined surface. In a preferred embodiment, each stringer has two adjoining longitudinally extending surfaces that are so inclined to one another and to adjoining surfaces of the stringer as to form a longitudinally extending groove in one side face of the stringer, the or each hole in one or each end portion of the stringer through which protrudes a part of the connecting member extends through that part of the stringer having said inclined surfaces, and the or each separate elongate member extending lengthwise between said protruding parts of the connecting member and surfaces of said end portions of the stringers lies substantially wholly along the groove. Preferably, no part of the protruding parts of the connecting member extends beyond the side walls of the groove.

Each part of each connecting member protruding through a hole in a stringer preferably is bounded by two transversely extending slots in the connecting member and is pressed out of the plane or planes of the member to form, in effect, a staple which is integral with the connecting member and which protrudes through its associated hole in the stringer.

Preferably, throughout its length and over at least a substantial part of its width, each connecting member has a transverse cross-section that is substantially identical to that of the aligned end portions of the stringers so that, when the connecting member is locked to said end portions of the stringers, the connecting member is in inter-facial contact with the end portions over the whole of its length and over at least a substantial part of its width. Where the holes in the end portions of the stringers through which parts of the connecting member protrude are located near one longitudinal edge of the stringers, preferably the longitudinal edge of the connecting member remote from the said protruding parts of the connecting member is so shaped that it overlies the adjacent longitudinal edges of the aligned end portions of the stringers to assist in preventing relative movement between the stringers and between the stringers and the connecting member in a direction transverse to the longitudinal axis of the stringers. These overlying longitudinally extending edges of the end portions of the stringers and of the connecting member may be positively locked together by providing at least one slot or notch in the longitudinal edge of each end portion which is engaged by a deformed part of the adjacent longitudinal edge of the connecting member.

The or each separate elongate member locking the connecting member to the stringers is preferably a pin and, in its preferred form, is of a shape similar to that of hairpin, so that when the pin is inserted between the or each protruding part of the connecting member and surfaces of the end portions of the stringers, a part of the pin overlies and clips over one or each protruding part of the connecting member.

The invention is further illustrated by a description, by way of example, of a preferred form of cable ladder system with reference to the accompanying drawings, in which:-

Figure 1 is a fragmental pictorial view of a cable ladder of the system;

Figure 2 is a fragmental pictorial view of a stringer and one of the rungs of the cable ladder shown in Figure 1;

Figure 3 is an enlarged view of detail of Figure 2; and

6

Figures 4 and 5 are fragmental perspective views of a connection between stringers of two cable ladders as shown in Figure 1.

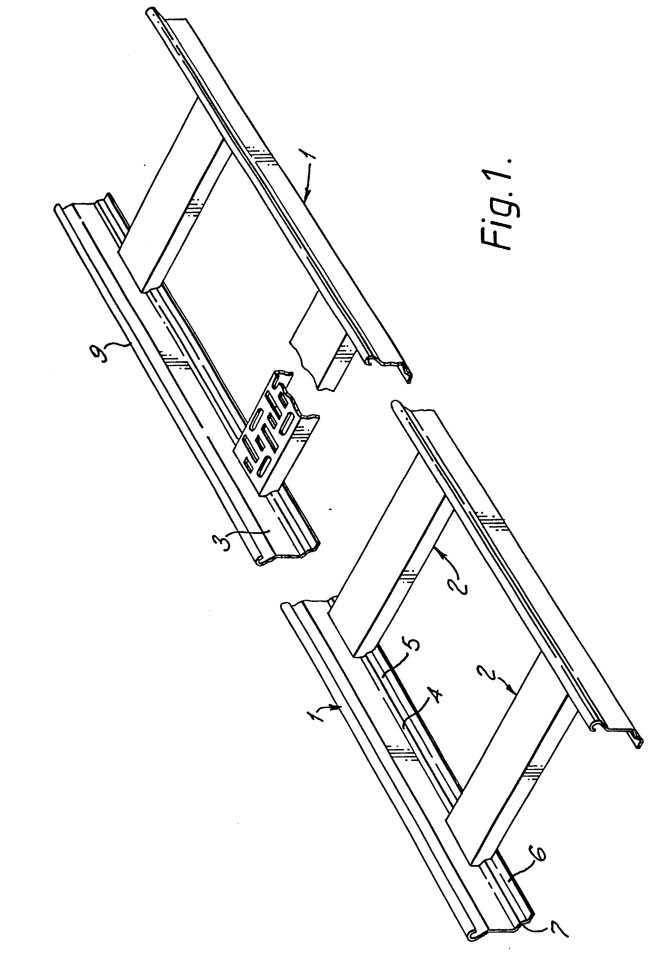

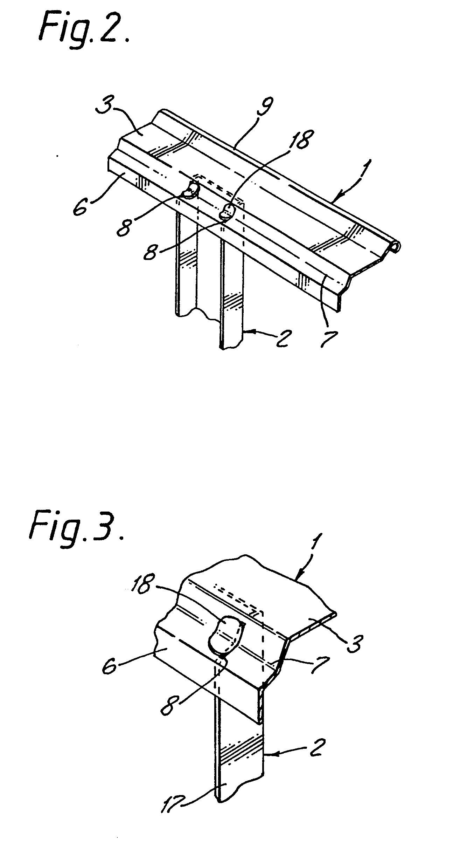

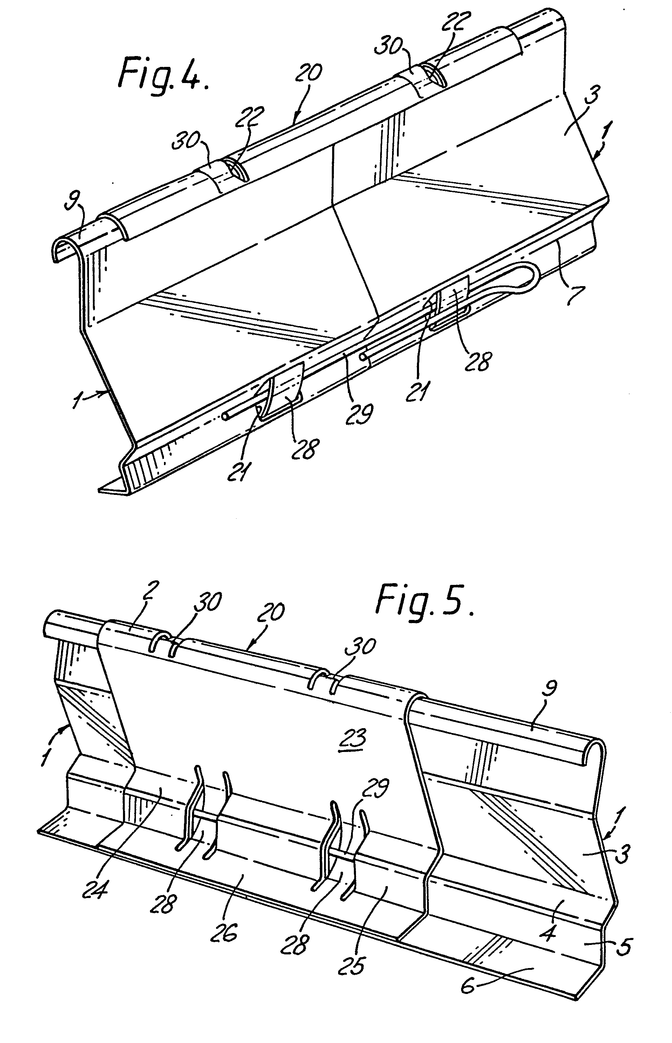

Referring to Figures 1 to 3, the cable ladder comprises two steel stringers 1 of substantially channel-shaped cross-section arranged substantially parallel to one another with the flanges of the stringers pointing inwardly and, extending transversely between and secured to the stringers at spaced positions along their lengths, a plurality of steel rungs 2 each of channel-shaped cross-section. Each stringer 1 includes a base 3, a folded-over flange 9 and a flange 6 interconnected by two adjoining longitudinally extending surfaces 4 and 5 which are inclinded at obtuse angles to the base 3 and the flange 6, respectively, to form, in the outer side face of the stringer, a longitudinally extending groove 7. The part of each stringer 1 having longitudinally extending surfaces 4 and 5 has at each of a plurality of longitudinally spaced positions along its lengths a pair of longitudinally spaced, transversely extending slots 8. End parts 18 of the side walls 17 of a rung 2 protrude through a pair of slots 8 and are folded, as shown in Figures 2 and 3, to lie in the groove 7 and to lock the rung permanently to the stringer. The end faces of the rungs 2 abut the bases 3 of the channel-shaped stringers 1.

Referring to Figures 4 and 5, two cable ladders of the kind shown in Figure 1 are joined end-to-end by arranging for their stringers 1 to abut and by securing together the abutting end portions of each pair of aligned stringers by means of a separate connecting member 20. Each end portion of each stringer 1 has a hole 21 extending through the inclined surfaces 4 and 5 and also has a hole 22 in its folded over flange 9. The connecting member 20 includes a base 23, a flange 26 and, interconnecting the base and the flange two longitudinally extending parts 24 and 25 which are inclined at obtuse angles to the base 23 and flange 26, respectively. At each of two longitudinally spaced positions along the longitudinally surfaces 24 and 25 are two longitudinally spaced, transversely extending slots which extend through the connecting member and bound a part 28 which is pressed out of the planes of the surfaces to form, in effect, a staple integral with the base 23 and flange 26. The parts 28 protrude through the holes 21 in the end portions of the stringers 1 and the connecting member 20 is locked to the end portions by a pin 29 which is inserted lengthwise between the parts 28 and the internal surfaces of the aligned grooves 7. The longitudinal edge of the connecting member or fish plate 20 remote from the parts 28 is folded over and engages over the aligned folded over flanges 9 of the end portions of the stringers and is positively locked to the flanges 9 by parts 30 which protrude into the holes 22.

It will be appreciated that cable ladders as shown in Figures 1 to 3 can be readily interconnected by the method shown in Figures 4 and 5 to form a ladder-like support structure without the use of any hand tools.

0074699

8

<u>CLAIMS:</u>

1. A cable ladder system comprising at least two cable ladders so arranged end-to-end that their stringers abut or are closely spaced apart and, securing the stringers together, separately formed connecting members each overlapping and being secured to adjacent end portions of a pair of aligned stringers, wherein parts of each connecting member and/or of said adjacent end portions of the stringers protrude through holes in said adjacent end portions of the stringers and/or in the connecting members and each connecting member is locked to the stringers by at least one separate elongate member extending lengthwise between said protruding parts of the connecting member and/or of said adjacent end portions of the aligned stringers and surfaces of said end portions of the aligned stringers and/or a surface of the connecting member.

2. A cable ladder system comprising at least two cable ladders in each of which each stringer has a longitudinally extending surface that is inclined at an obtuse angle to an adjoining longitudinally extending surface of the stringer and has, at each of a plurality of longitudinally spaced positions along the length of the stringer, two longitudinally spaced, transversely extending slots in said inclined surface through which parts of the side walls of a channel-shaped rung protrude, said protruding parts of the side walls of the rung and/or the adjacent parts of the stringer being so deformed that the rung is permanently locked to the stringer, which cable ladders are so arranged end-to-end that their stringers abut or are closely spaced apart and, securing the stringers together, separately formed connecting members each overlapping and being secured to adjacent end portions of a pair of aligned stringers, wherein parts of each connecting member protrude through holes extending through those parts of said adjacent end portions of the stringers having said inclined surfaces and the connecting member is locked to the stringers by at least one separate elongate member extending lengthwise between said protruding parts of the connecting member and surfaces of said end portions of the aligned stringers.

3.    A cable ladder system as claimed in Claim 2, wherein each stringer has two adjoining longitudinally extending surfaces that are so inclined to one another and to adjoining surfaces of the stringer as to form a longitudinally extending groove in one side face of the stringer, the or each hole in one or each end portion of the stringer through which protrudes a part of the connecting member extends through that part of the stringer having said inclined surfaces, and the or each separate elongate member extending lengthwise between said protruding parts of the connecting member and surfaces of said end portions of the stringers lies substantially wholly along the groove.

4.  A cable ladder system as claimed in Claim 3, wherein no part of the protruding parts of the connecting member extends beyond the side walls of the groove.

5.  A cable ladder system as claimed in any one of the preceding Claims, wherein each part of each connecting member protruding through a hole in a stringer is bounded by two transversely extending slots in the connecting member and is pressed out of the plane or planes of the member to form, in effect, a staple which is integral with the connecting member and which protrudes through its associated hole in the stringer.

6.  A cable ladder system as claimed in any one of the preceding Claims, wherein, throughout its length and over at least a substantial part of its width, each connecting member has a transverse cross-section that is substantially identical to that of the aligned end portions of the stringers so that, when the connecting member is locked to the said end portions of the stringers, the connecting member is in inter-facial contact with the end portions over the whole of its length and over at least a substantial part of its width.

7.  A cable ladder system as claimed in Claim 6, wherein the holes in the end portions of the stringers through which parts of the connecting member protrude are located near one longitudinal edge of the stringers and wherein the longitudinal edge of the connecting member remote from the said protruding parts of the connecting member is so shaped that it overlies the adjacent longitudinal edges of the aligned end portions of the stringers to assist in preventing relative movement between the stringers and between the stringers and the connecting member in a direction transverse to the longitudinal axis of the stringers.

8. A cable ladder system as claimed in Claim 7, wherein said overlying longitudinally extending edges of the end portions of the stringers and of the connecting member are positively locked together by providing at least one slot or notch in the longitudinal edge of each end portion which is engaged by a deformed part of the longitudinal edge of the connecting member.

9. A cable ladder system as claimed in any one of the preceding Claims, wherein the or each separate elongate member locking the connecting member to the stringers is a pin.

10. A cable ladder system as claimed in Claim 9, wherein the or each pin locking the connecting member to the stringers is of a shape similar to that of a hairpin, so that when the pin is inserted between the or each protruding part of the connecting member and surfaces of the end portions of the stringers, a part of the pin overlies and clips over one or each protruding part of the connecting member.

113

Fig.1.

# Fig. 2.

# Fig. 3.

Fig.4.

Fig.5.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | H 02 G    3/06 |
| Y | NL-A-7 412 503  (KEMPENLAND)<br>*Page  2,  line  9 - page 3, line 15; figures 1-5* | 1,5-8 | |
| | --- | | |
| Y | NL-A-7 807 345  (GOUDA)<br>*Page  2,  line 27 - page 3, line 11; figure 1* | 1-4,9 | |
| | --- | | |
| A | FR-A-2 408 748  (MAVIL)<br>*Page 5, lines 1-7; page 6, lines 3-8; figures 5,7,8* | 1,5 | |
| | --- | | |
| A | FR-A-2 226 606  (KRIEG,ZIVY)<br>*Page  4,  lines  8-33;  figures 1,2,4* | 2-4 | |
| | ----- | | TECHNICAL FIELDS SEARCHED (Int. Cl. ³) |
| | | | H 02 G    3/00 |

The present search report has been drawn up for all claims

| Place of search | Date of completion of the search | Examiner |
|---|---|---|
| THE HAGUE | 07-12-1982 | TIELEMANS H.L.A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503  03.82